# FASCICULE DE BREVET EUROPEEN

(11) **EP 1 659 297 B1**
(45) Date de publication et mention de la délivrance du brevet: **07.01.2009**
(21) Numéro de dépôt: 05354036.5
(22) Date de dépôt: 12.10.2005
(51) Int. Cl.: F16B 2/24, E04B 9/20, F16L 3/24

(54) **Dispositif d'attache pour fixer divers éléments à un support**
Abhängevorrichtung um diverse Elemente an einen Träger zu befestigen
Fastening device for fixing diverse elements to a support

(30) Priorité: 17.11.2004 FR 0412228
(43) Date de publication de la demande: 24.05.2006
(73) Titulaire: A. RAYMOND ET CIE, 38019 Grenoble Cedex 1 (FR)
(72) Inventeur: Boville, Daniel, 75020 Paris (FR)
(74) Mandataire: Hecké, Gérard

(56) Documents cités:
- US-A- 3 126 182
- US-A- 3 298 646

## Description

### Domaine technique de l'invention

L'invention est relative à un dispositif d'attache comprenant une pièce métallique obtenue par découpage et pliage d'une tôle ou d'un feuillard ayant une épaisseur prédéterminée, ladite pièce étant conformée en cavalier destiné à être enfourché sur un support métallique en forme de poutre ou de barre, et comportant des moyens d'accrochage pour la fixation ou la suspension de divers éléments.

### Etat de la technique

Il existe deux principaux types de dispositifs d'attache pour fixer divers éléments par accrochage ou suspension sur des poutres métalliques, notamment dans le domaine du bâtiment.

Un premier type d'attache utilise un cavalier en acier trempé destiné à être enfiché sur le support métallique au moyen d'un marteau. Un tel cavalier en forme de pince nécessite une gamme de plusieurs modèles pour tenir compte des différentes épaisseurs des poutres ou lames pouvant constituer le support. La nature des éléments suspendus à cette attache connue impose d'autre part la mise en place de plusieurs accessoires d'adaptation, lesquels sont constitués par des pièces détachées destinées à être fixées au cavalier pour tenir compte des différents types et des différentes façons de suspendre les objets ou éléments.

Le deuxième type d'attache utilise un étrier métallique composé d'une mâchoire rigide et d'une vis, laquelle est vissée dans un trou fileté de l'aile supérieure. Une telle attache peut s'adapter à différentes épaisseurs du support, il suffit de visser suffisamment la vis qui vient en engagement contre le support. Les inconvénients de ce type d'attache connu sont les suivants :
- usage d'un outil (clé ou tournevis) pour assurer un serrage efficace de la vis sur le support ;
- résistance mécanique réduite de l'attache à cause de l'effet de levier créé par la vis lors du serrage ;
- usage obligatoire d'accessoires de fixation lorsque les éléments sont constitués par des tiges filetées ou lisses, des colliers, des lanières plastique, des chaînettes, câbles, etc... La fixation de ces accessoires s'effectue par tout procédé d'assemblage, notamment par rivetage.

Le document US 3298646 décrit un cavalier destiné à être enfourché sur un support métallique en forme de barre, et comportant des moyens d'accrochage pour la fixation ou la suspension de divers éléments. Le cavalier comporte un étrier en U ayant deux faces latérales constituant une mâchoire équipée d'une série d'ergots échelonnés le long des bras supérieurs de l'étrier et d'une paire de dents solidaire d'un bras inférieur flexible.

Le document US 3126182 se rapporte à une pince de retenue pour fixer un tube sur un profilé au moyen d'une vis de blocage. La pince est en forme de U pouvant être enfourchée sur le tube, et comporte une paire d'ailes latérales munies chacune d'une mâchoire à dents destinée à être enfilée de chant sur le profilé de chaque côté du tube. L'écartement entre les dents supérieures et inférieures de la mâchoire est constant, et est adapté à une épaisseur prédéterminée du profilé.

### Objet de l'invention

L'objet de l'invention consiste à remédier aux inconvénients précités, et à réaliser un dispositif d'attache de résistance mécanique élevée, pouvant gérer plusieurs épaisseurs du support, sans nécessiter l'emploi d'outils de montage et d'accessoires spécifiques pour la fixation des éléments, et pouvant supporter des poids suspendus importants sans risque d'arrachement.

Le dispositif selon l'invention est caractérisé en ce que les deux dents sont flexibles en jouant le rôle de ressorts aux extrémités de deux bras inférieurs rigides, lesquels forment les deux faces latérales de l'étrier en association avec les deux bras supérieurs.

L'incrustation des ergots dans la face supérieure du support et l'effet ressort des deux dents flexibles améliorent la résistance à l'arrachement en s'opposant à tout mouvement de glissement de la pièce en position insérée. La venue en contact des deux dents flexibles contre la face inférieure du support permet de gérer plusieurs épaisseurs du support.

Selon un mode de réalisation préférentiel, les deux dents sont repliées à angle droit vers l'extérieur de l'intervalle séparant les deux faces latérales, chaque dent étant susceptible de s'abaisser par déformation élastique lors de l'insertion de la mâchoire sur le support. Chaque dent présente une longueur prédéterminée autorisant une déflexion de plusieurs millimètres en fonction de l'épaisseur du support. L'étrier de la pièce comporte une face supérieure et une face frontale en liaison avec les faces latérales, la face supérieure étant formée par une partie repliée à angle droit de chaque bras supérieur.

D'autres caractéristiques peuvent être utilisées isolément ou en combinaison :
- un interstice s'étend longitudinalement au milieu de la face supérieure jusqu'à un passage autorisant l'introduction d'un élément fixé à la paroi interne de la face frontale ;
- la face frontale de la pièce peut être munie d'un orifice circulaire pour l'accrochage ou le passage d'un élément, et comporte à la partie supérieure un bec d'accrochage replié vers l'extérieur. ;
- les dents flexibles sont agencées symétriquement par rapport au plan médian vertical de symétrie ;
- la face supérieure de la pièce comporte un premier rebord semi-circulaire situé en regard d'un deuxième rebord semi-circulaire ménagé au sommet de la face frontale ;
- la pièce comporte des languettes intermédiaires dirigées à l'intérieur de l'étrier vers la face frontale pour permettre un prépositionnement d'une tige traversant l'étrier.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue en perspective du de l'étrier du dispositif d'attache selon l'invention ;
- la figure 2 montre une vue en élévation de la figure 1, les dents flexibles étant représentées en position inactive débrochée (traits pleins), et en position active embrochée (traits en pointillé) sur le support ;
- la figure 3A est une vue en plan de la figure 2 ;
- la figure 3B est une vue identique de la figure 3A d'une variante de réalisation ;
- la figure 4 est une vue de profil de la figure 2 ;
- la figure 5 montre la tôle découpée avant pliage de la pièce représentative du dispositif d'attache de la figure 1 ;
- les figures 6 et 7 montrent le dispositif d'attache de la figure 2 en position débrochée, avec un câble solidarisé par un collier, respectivement à la face frontale, et à la face supérieure de l'étrier ;
- la figure 8 représente le dispositif d'attache de la figure 2, avec une tige filetée traversant l'étrier selon une direction verticale ;
- la figure 9 est une vue de profil de la figure 8, illustrant une possibilité de débattement angulaire limité de la tige de part et d'autre de la direction verticale ;
- la figure 10 illustre un autre montage de la tige traversant un orifice du dispositif d'attache, lequel coiffe un support vertical selon un U renversé ;
- la figure 11 montre une tige accrochée par un crochet dans un orifice de la face frontale du dispositif d'attache de la figure 1 ;
- les figures 12 à 16 sont des vues identiques respectives des figures 1 à 5 d'une variante de réalisation du dispositif d'attache ;
- les figures 17 et 18 représentent le dispositif d'attache de la figure 12 avec une tige filetée maintenue sans écrou de blocage, respectivement dans la direction verticale, et dans la position inclinée.

### Description d'un mode de réalisation préférentiel.

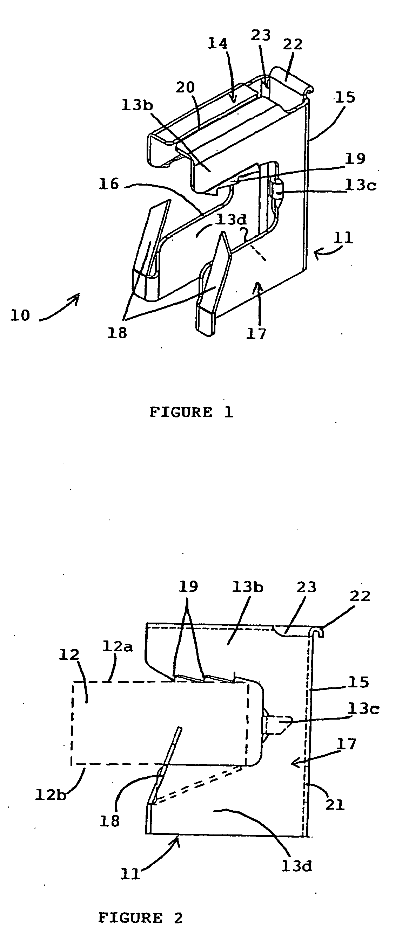

En référence aux figures 1 à 5, un dispositif d'attache 10 comporte une pièce métallique 11 conformée en cavalier pour être enfourché de chant sur un support 12 de manière à autoriser la suspension ou la fixation de divers éléments. Le support 12 (schématisé en traits pointillés sur la figure 2) est constitué à titre d'exemple par une poutre ou une barre métallique rectiligne et de section rectangulaire ayant deux faces 12a, 12b opposées parallèles et planes.

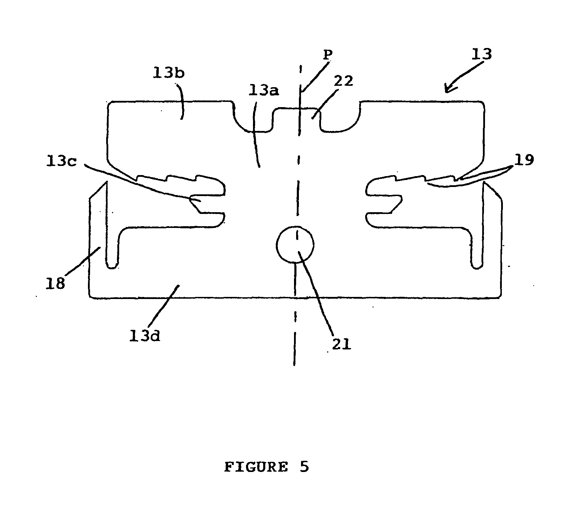

La pièce métallique 11 est obtenue par découpage d'une tôle 13 ou d'un feuillard métallique ayant une épaisseur réduite. Le découpage s'effectue selon un profil représenté à la figure 5, lequel présente une structure en double E symétrique par rapport au plan P médian vertical de symétrie. La structure en double E est composée d'une âme 13a commune dotée de part et d'autre de deux bras supérieurs 13b, de deux languettes 13c intermédiaires et de deux bras inférieurs 13d.

La tôle 13 découpée est ensuite pliée autour de plusieurs lignes de pliage pour réaliser la pièce 11 (figure 1) monobloc du dispositif d'attache 10.

La pièce 11 métallique pliée constitue un étrier en U comportant une face supérieure 14, une face frontale 15 et deux faces latérales 16, 17 parallèles par rapport au plan de symétrie P. A l'opposé de la face supérieure 14, le fond est ouvert sur toute la profondeur de l'étrier.

La partie terminale de chaque bras inférieur 13d est pourvue d'une dent 18 flexible repliée à angle droit vers l'extérieur, et susceptible de s'abaisser par élasticité lors du mouvement d'insertion de la pièce 11 sur le support 12 de manière à constituer un ressort. Les deux dents 18 sont symétriques par rapport au plan médian P, et sont situées à l'extérieur de l'intervalle séparant les faces latérales 16, 17.

Les faces latérales 16, 17 forment une mâchoire en forme de C ou de U (figures 1 et 2) apte à être engagée sur le support 12 pour assurer le maintien de la pièce 11. La largeur de la mâchoire correspond à l'intervalle séparant les faces latérales 16, 17. L'arête de chaque bras supérieur 13b est avantageusement équipée d'une série d'ergots 19 légèrement inclinés vers l'intérieur pour autoriser une incrustation des ergots 19 lors du mouvement d'insertion sur le support 12.

L'incrustation des ergots 19 dans la face supérieure du support 12 et l'effet ressort des deux dents 18 améliorent la résistance à l'arrachement en s'opposant à tout mouvement de glissement de la pièce 11 en position insérée. La venue en contact des deux dents 18 flexibles contre la face inférieure du support 12 permet de gérer plusieurs épaisseurs du support 12, sans nécessiter l'usage d'outils ou de moyens d'ajustage spécifiques. La longueur de chaque dent 18 est choisie à cet effet pour permettre une déflexion maximum de l'ordre de 7mm.

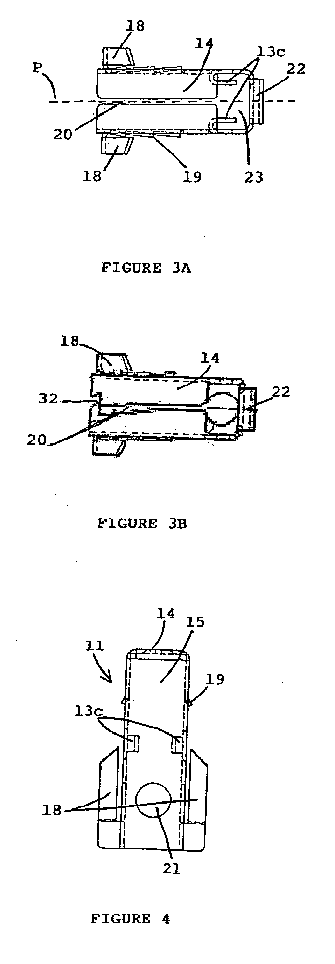

La face supérieure 14 de la pièce 11 est formée par une partie repliée à angle droit de chaque bras supérieur 13b. Selon la figure 3A, un interstice 20 rectiligne s'étend longitudinalement dans le plan médian P de symétrie. Selon la variante de la figure 3B, l'interstice 20 comporte une partie inclinée terminée par un système de retenue 32 par agrafage situé à l'opposé du bec 22.

La face frontale 15 de la pièce 11 comprend une fraction de l'âme 13a, laquelle est munie à la base d'un orifice 21 circulaire de fixation, et d'un bec 22 d'accrochage à la partie supérieure.

Il est clair que des orifices supplémentaires peuvent être ménagés dans la face frontale 15, et dans les faces latérales 16, 17 pour augmenter les possibilités d'accrochage d'éléments.

Les deux languettes 13c intermédiaires sont repliées en formes d'épingles à l'intérieur de l'étrier en étant orientées vers la face frontale 15. La présence de ces languettes 13c internes permet de positionner et de guider une tige filetée ou tout autre élément traversant l'étrier par un passage 23 ménagé entre la face supérieure 14 et la face frontale 15.

Divers éléments, notamment des tiges filetées ou lisses, colliers métalliques, lanières en matière plastique, chaînettes, câbles, etc... peuvent être solidarisés directement à la pièce 11 du dispositif d'attache 10 sans faire usage d'accessoires d'adaptation. Le montage de ces éléments intervient après avoir enfourché la pièce 11 sur son support 12. La résistance mécanique est élevée, ce qui permet de supporter des poids suspendus importants.

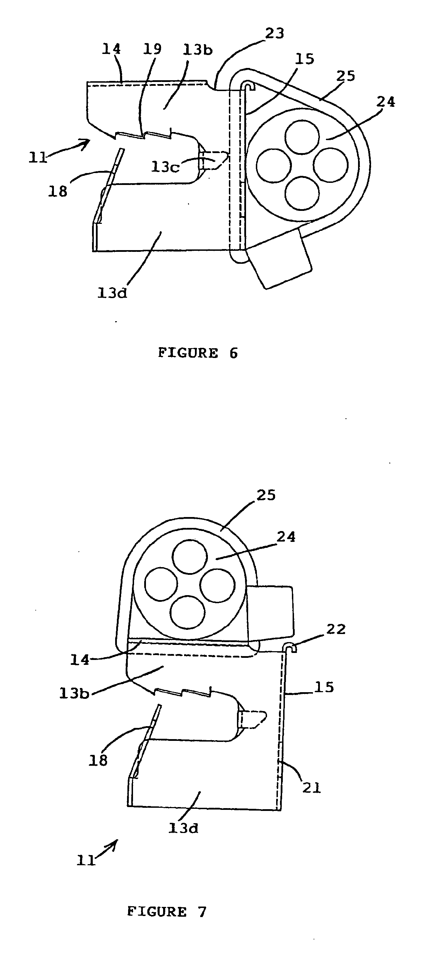

Sur la figure 6, un câble 24 électrique peut être assujetti à la face frontale 15 par l'action de serrage d'un collier 25 ou d'une frette de maintien, laquelle traverse le passage 23 en s'étendant verticalement à l'intérieur de l'étrier.

Sur la figure 7, le câble 24 électrique est rapporté sur la face supérieure 14 de la pièce 11, le passage du collier 25 s'effectuant dans ce cas horizontalement à l'intérieur de la partie repliée des bras supérieurs 13b.

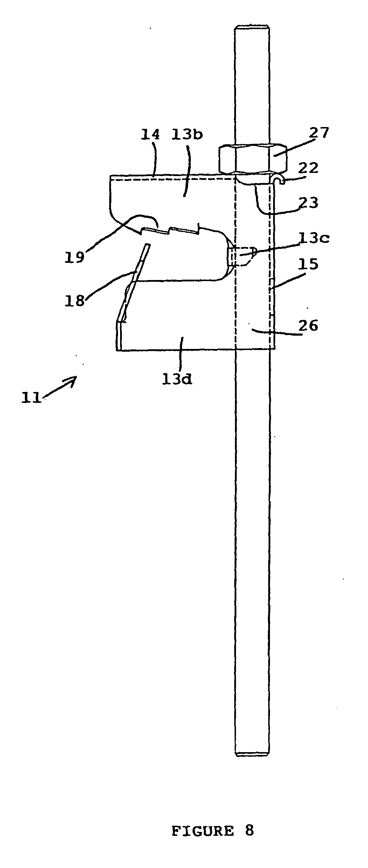

Sur la figure 8, l'élément fixé à la pièce 11 est constitué par une tige 26 filetée qui traverse le passage 23 en étant prépositionnée dans la position verticale par les deux languettes 13c intermédiaires. Un écrou 27 de blocage est vissé sur la partie filetée de la tige 26 en prenant appui sur le bec 22 pour assurer la fixation mécanique.

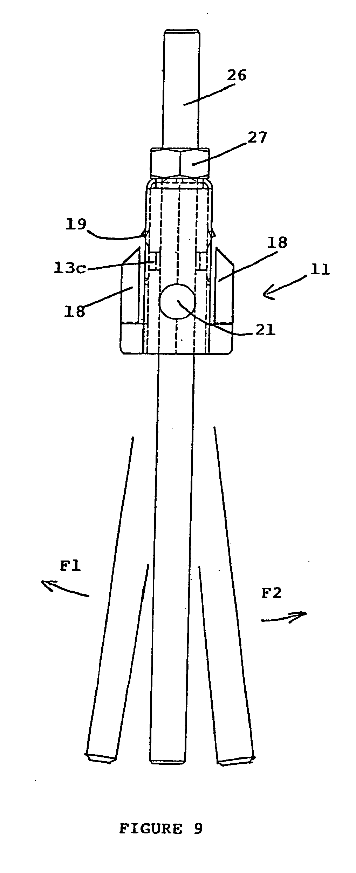

Sur la figure 9, une légère déformation des languettes 13c intermédiaires permet un débattement angulaire de la tige 26 selon les flèches F1 ou F2. L'angle de débattement s'opère de part et d'autre de la direction verticale, et est de l'ordre de 10° de chaque côté.

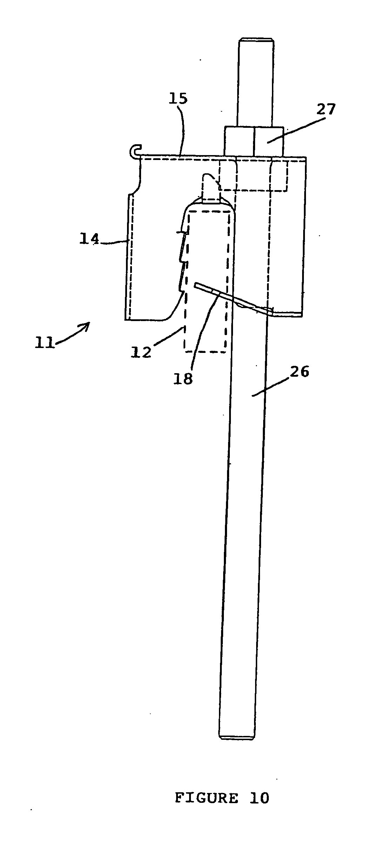

Sur la figure 10, la pièce 11, au lieu d'être enfourchée horizontalement sur le support 12, vient coiffer ce dernier selon un U renversé. La tige 26 traverse l'orifice 21 selon une direction perpendiculaire à la face frontale 15.

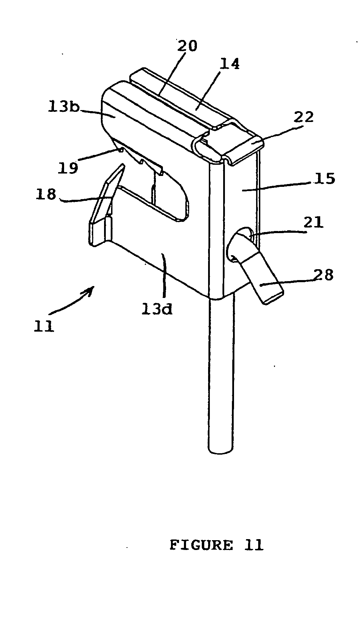

Sur la figure 11, un crochet 28 d'une tige lisse est accroché dans l'orifice 21 de la face frontale 15 par l'intérieur de la pièce 11. Il est clair que le crochet 28 peut être remplacé par une chaîne ou tout autre accessoire de suspension.

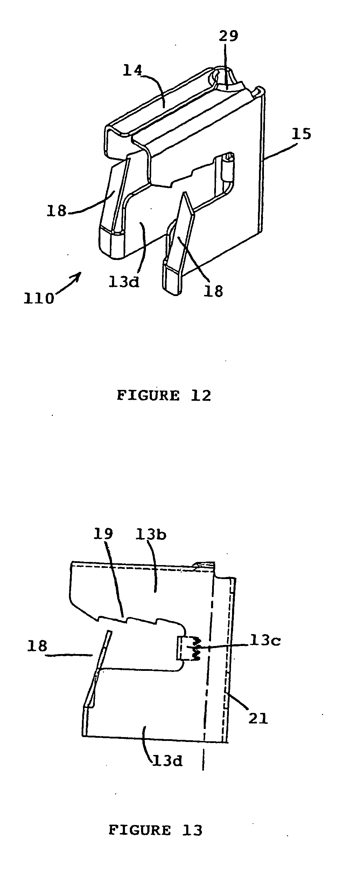

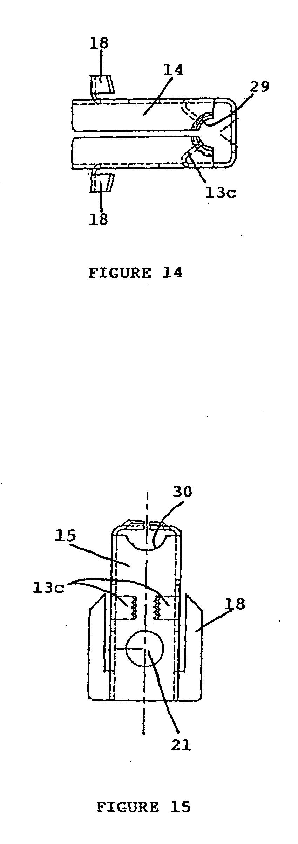

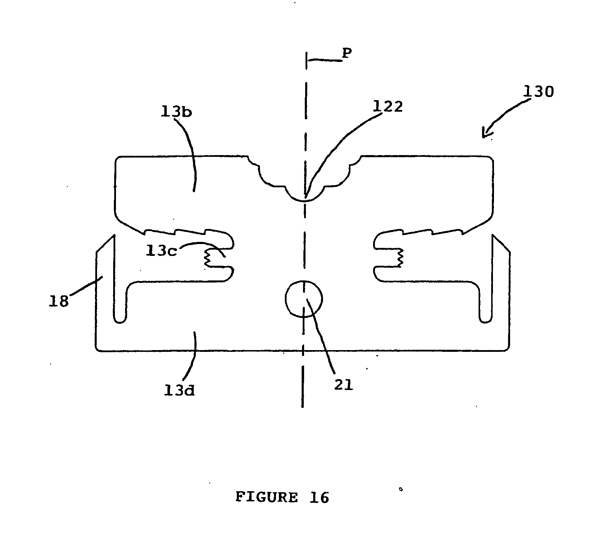

Selon la variante de réalisation des figures 12 à 16, la structure de la pièce 110 diffère de celle des figures 1 à 5, en ce que la tôle 130 au lieu d'avoir un bec 22 comme la tôle 13, comporte une découpe incurvée 122. Les extrémités des languettes 13c sont striées de manière à former un peigne. Le reste de la pièce 110 est identique à la structure de la pièce 11 des figures 1 à 5.

La pièce 110 permet le maintien d'une tige 26 filetée sans utiliser d'écrou de blocage. Après pliage, la découpe 122 forme un premier rebord 29 semi-circulaire dans la face supérieure 14, et un rebord 30 semi-circulaire au sommet de la face frontale 15.

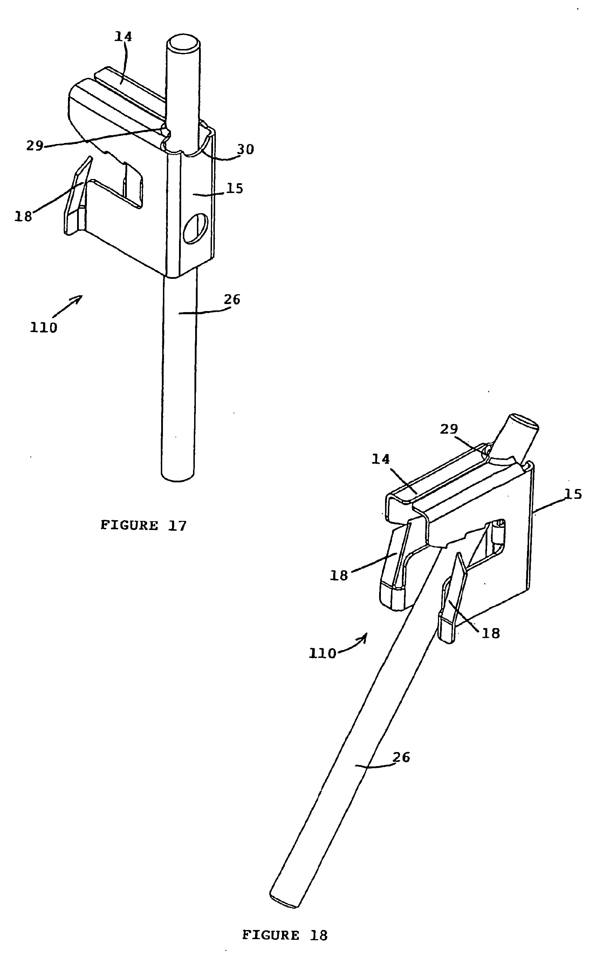

Sur la figure 17, la tige 16 filetée s'étend dans la direction verticale en étant maintenue par le premier rebord 29 et par les stries des languettes 13c. Selon la figure 18, la tige 26 filetée peut être inclinée selon un angle prédéterminé, en étant retenue par les deux rebords 29, 30 et les languettes 13c.

## Revendications

1. Dispositif d'attache comprenant une pièce métallique (11, 110) obtenue par découpage et pliage d'une tôle (13) ou d'un feuillard ayant une épaisseur prédéterminée, ladite pièce étant conformée en cavalier destiné à être enfourché sur un support (12) métallique en forme de poutre ou de barre, et comportant des moyens d'accrochage pour la fixation ou la suspension de divers éléments, ladite pièce (11, 110) comportant un étrier en U ayant deux faces latérales (16, 17) constituant une mâchoire équipée d'une série d'ergots (19) échelonnés le long des bras supérieurs (13b) de l'étrier et d'une paire de dents (18) solidaire au moins d'un bras inférieur (13d),
**caractérisé en ce que** les deux dents (18) sont flexibles en jouant le rôle de ressorts aux extrémités de deux bras inférieurs (13d) rigides, lesquels forment les deux faces latérales de l'étrier en association avec les deux bras supérieurs (13b).

2. Dispositif d'attache selon la revendication 1, **caractérisé en ce que** les deux dents (18) sont repliées à angle droit vers l'extérieur de l'intervalle séparant les deux faces latérales (16, 17), chaque dent (18) étant susceptible de s'abaisser par déformation élastique lors de l'insertion de la mâchoire sur le support (12).

3. Dispositif d'attache selon la revendication 1 ou 2, **caractérisé en ce que** chaque dent (18) présente une longueur prédéterminée autorisant une déflexion de plusieurs millimètres en fonction de l'épaisseur du support (12).

4. Dispositif d'attache selon la revendication 1, **caractérisé en ce que** les ergots (19) s'étendent le long de l'arête rectiligne de chaque bras supérieur (13b) de manière à s'incruster dans la face métallique du support (12) située à l'opposé des dents (18) flexibles.

5. Dispositif d'attache selon la revendication 1, **caractérisé en ce que** l'étrier de la pièce (11, 110) comporte une face supérieure (14) et une face frontale (15) en liaison avec les faces latérales (16, 17).

6. Dispositif d'attache selon la revendication 5, **caractérisé en ce que** la face supérieure (14) est formée par une partie repliée à angle droit de chaque bras supérieur (13b).

7. Dispositif d'attache selon la revendication 6, **caractérisé en ce qu'**un interstice (20) s'étend longitudinalement au milieu de la face supérieure (14) jusqu'à un passage (23) autorisant l'introduction d'un élément fixé à la paroi interne de la face frontale (15).

8. Dispositif d'attache selon la revendication 5, **caractérisé en ce que** la face frontale (15) de la pièce (11, 110) est munie d'au moins un orifice (21) circulaire pour l'accrochage ou le passage d'un élément.

9. Dispositif d'attache selon la revendication 8, **caractérisé en ce que** la face frontale (15) de la pièce (11) comporte à la partie supérieure un bec (22) d'accrochage replié vers l'extérieur.

10. Dispositif d'attache selon la revendication 1, **caractérisé en ce que** les dents (18) flexibles sont agencées symétriquement par rapport au plan médian (P) vertical de symétrie.

11. Dispositif d'attache selon la revendication 5, **caractérisé en ce que** la face supérieure (14) de la pièce (110) comporte un premier rebord (29) semi-circulaire situé en regard d'un deuxième rebord (30) semi-circulaire ménagé au sommet de la face frontale (15).

12. Dispositif d'attache selon l'une des revendications précédentes, **caractérisé en ce que** la pièce (11, 110) comporte des languettes (13c) intermédiaires dirigées à l'intérieur de l'étrier vers la face frontale (15) pour permettre un prépositionnement d'une tige (26) traversant l'étrier.

13. Dispositif d'attache selon la revendication 12, **caractérisé en ce que** les languettes (13c) sont repliées en forme d'épingles.

## Claims

1. Attachment device comprising a metal part (11, 110) obtained by cutting and folding a metal plate (13) or sheet having a predetermined thickness, said part being shaped as a rider designed to be fitted astride a metal support (12) in the form of a beam or a bar, and comprising securing means for fixing or suspending various elements, said metal part (11, 110) comprising a U-shaped flange having two side faces (16, 17) forming a jaw equipped with a series of spigots (19) staggered along the top arms (13b) of the flange and with a pair of teeth (18) fixed to at least a bottom arm (13d),
**characterized in that** the two teeth (18) are flexible for acting as springs at the ends of the rigid bottom arms (13b), which form the two side faces of the flange in association with the two top arms (13d).

2. Attachment device according to claim 1, **characterized in that** the two teeth (18) are folded at right angles towards the outside of the gap separating the two side faces (16, 17), each tooth (18) being able to bend downwards by flexible deformation when the jaw is inserted on the support (12).

3. Attachment device according to claim 1 or 2, **characterized in that** each tooth (18) presents a predetermined length enabling a deflection of several millimetres depending on the thickness of the support (12).

4. Attachment device according to claim 1, **characterized in that** the spigots (19) extend along the straight edge of each top arm (13b) so as to dig into the metal face of the support (12) situated opposite the flexible teeth (18).

5. Attachment device according to claim 1, **characterized in that** the flange of the part (11, 110) comprises a top face (14) and a front face (15) joined to the side faces (16, 17).

6. Attachment device according to claim 5, **characterized in that** the top face (14) is formed by a part of each top arm (13b) folded at right angles.

7. Attachment device according to claim 6, **characterized in that** a gap (20) extends longitudinally in the middle of the top face (14) up to a passage (23) enabling an element fixed to the inside wall of the front face (15) to be inserted.

8. Attachment device according to claim 5, **characterized in that** the front face (15) of the part (11, 110) is provided with at least one circular aperture (21) for latching or passage of an element.

9. Attachment device according to claim 8, **characterized in that** the front face (15) of the part (11) comprises an outwardly folded latching nose (22) at the top part thereof.

10. Attachment device according to claim 1, **characterized in that** the flexible teeth (18) are arranged symmetrically with respect to the vertical mid-plane (P) of symmetry.

11. Attachment device according to claim 5, **characterized in that** the top face (14) of the part (110) comprises a first semi-circular rim (29) situated facing a second semi-circular rim (30) arranged at the top of the front face (15).

12. Attachment device according to any one of the foregoing claims, **characterized in that** the part (11, 110) comprises intermediate tabs (13c) directed inside the flange towards the front face (15) to enable pre-positioning of a rod (26) passing through the flange.

13. Attachment device according to claim 12, **characterized in that** the tabs (13c) are folded into the shape of pins.

## Patentansprüche

1. Befestigungsvorrichtung, die ein Metallteil (11, 110) umfasst, das durch Ausschneiden und Biegen eines Blechs (13) oder Stahlbands einer vorbestimmten Dicke erhalten wurde, welches Teil in Form einer Klammer ausgeführt ist, die dazu bestimmt ist, einen balken- oder stangenförmigen Metallträger (12) gabelförmig zu umschließen, und Befestigungsmittel zur Befestigung oder Aufhängung verschiedener Elemente umfasst, wobei das Teil (11, 110) einen U-förmigen Bügel mit zwei Seitenflächen (16, 17) umfasst, die eine Einspannbacke bilden, die mit einer Reihe von Nocken (19) versehen ist, die entlang der oberen Arme (13b) des Bügels stufenartig vorgesehen sind, und ein Paar Zähne (18), das fest mit mindestens einem unteren Arm (13d) verbunden ist, **dadurch gekennzeichnet, dass** die beiden Zähne (18) biegsam sind und als Federn für die Enden zweier starrer unterer Arme (13d) fungieren, die im Zusammenwirken mit den beiden oberen Armen (13b) die beiden Seitenflächen des Bügels bilden.

2. Befestigungsvorrichtung nach Anspruch 1, **dadurch gekennzeichnet, dass** die beiden Zähne (18) zum Äußeren des Zwischenraums hin rechtwinklig umgebogen sind, der die beiden Seitenflächen (16, 17) trennt, wobei jeder Zahn (18) geeignet ist, sich beim Anbringen der Klemmbacke am Träger (12) durch elastische Verformung nach unten zu bewegen.

3. Befestigungsvorrichtung nach Anspruch 1 oder 2, **dadurch gekennzeichnet, dass** jeder Zahn (18) eine vorbestimmte Länge hat, die abhängig von der Dicke des Trägers (12) einen Ausschlag von einigen Millimetern erlaubt.

4. Befestigungsvorrichtung nach Anspruch 1**, dadurch gekennzeichnet, dass** sich die Nocken (19) entlang der geraden Kante jedes oberen Arms (13b) so erstrecken, dass sie sich in der Metallseite des Trägers (12) festsetzen, die sich entgegengesetzt zu den nachgiebigen Zähnen (18) befindet.

5. Befestigungsvorrichtung nach Anspruch 1, **dadurch gekennzeichnet, dass** der Bügel des Teils (11, 110) eine Oberseite (14) und eine Vorderseite (15) umfasst, die mit den Seitenflächen (16, 17) in Verbindung sind.

6. Befestigungsvorrichtung nach Anspruch 5, **dadurch gekennzeichnet, dass** die Oberseite (14) von einem rechtwinklig umgebogenen Teil jedes oberen Arms (13b) gebildet wird.

7. Befestigungsvorrichtung nach Anspruch 6, **dadurch gekennzeichnet, dass** sich ein Spalt (20) längs in der Mitte der Oberseite (14) bis zu einer Durchführung (23) erstreckt, die die Einführung eines festen Elements an der Innenwand der Vorderseite (15) erlaubt.

8. Befestigungsvorrichtung nach Anspruch 5, **dadurch gekennzeichnet, dass** die Vorderseite (15) des Teils (11, 110) mit mindestens einer kreisförmigen Öffnung (21) zur Befestigung oder Durchführung eines Elements versehen ist.

9. Befestigungsvorrichtung nach Anspruch 8, **dadurch gekennzeichnet, dass** die Vorderseite (15) des Teils (11) im oberen Bereich eine nach außen gebogene Befestigungsnase (22) aufweist.

10. Befestigungsvorrichtung nach Anspruch 1, **dadurch gekennzeichnet, dass** die beiden biegsamen Zähne (18) symmetrisch bezüglich der vertikalen Symmetriemittelebene (P) angeordnet sind.

11. Befestigungsvorrichtung nach Anspruch 5, **dadurch gekennzeichnet, dass** die Oberseite (14) des Teils (110) einen ersten halbrunden erhöhten Rand (29) aufweist, der gegenüber einem zweiten halbrunden erhöhten Rand (30) angeordnet ist, der ganz oben an der Vorderseite (15) vorgesehen ist.

12. Befestigungsvorrichtung nach einem der vorstehenden Ansprüche, **dadurch gekennzeichnet, dass** das Teil (11, 110) Zwischenzungen (13c) aufweist, die im Inneren des Bügels zur Vorderseite (15) hin ausgerichtet sind, um eine Vorpositionierung (26) einer Stange zu ermöglichen, die durch den Bügel geführt wird.

13. Befestigungsvorrichtung nach Anspruch 12, **dadurch gekennzeichnet, dass** die Zungen (13c) in Form von Nadeln umgebogen sind.
